# EUROPEAN PATENT APPLICATION

(11) **EP 1 202 274 A2**
(43) Date of publication of application: **02.05.2002**
(21) Application number: 01402713.0
(22) Date of filing: 19.10.2001
(51) Int. Cl.: G11B 21/00

(54) **Head assembly having staggered leading edge for tuned air entrainment**

(30) Priority: 24.10.2000 US 694947
(71) Applicant: IOMEGA CORPORATION, Roy, UT 84067 (US)
(72) Inventor: Hall, David L., Salt Lake City, Utah 84115 (US)
(74) Representative: Cabinet Hirsch

(57) **Abstract**

An improved head assembly having a staggered leading edge step scheme for tuned air entrainment for improved head performance in higher capacity disk drives. The head assembly having a staggered leading edge step scheme improves the performance of the heads by controlling an entrainment of air thereby forming a desired air bearing between a disk surface and the longitudinal rails of each slider of the head assembly thereby forcing the storage media to comply in an advantageous way (e.g., conform) to cause intimacy at the sensor. The improved head assembly having a staggered leading edge step scheme allows the flying characteristics of the head to be controlled by providing a first rail including a sensor for interfacing with the disk media and having a relatively long leading edge step that does not entrain air well and a second rail not having a sensor and having a relatively short leading edge step that entrains air better than the long leading edge step of the first rail. The first rail having a relatively poor leading edge step for entraining air as compared to the second rail allows the sensor to interface (e.g., contact) with the disk media, while the second rail having a relatively good leading edge for the entrainment of air allows the second rail and the balance of the slider to fly over the surface of the disk. This helps to improve the performance of the head assembly for higher capacity disk drives. In addition, the present invention provides for forming one leading edge step differently from the other and for varying the dimensions of the staggered leading edge steps to further control the flying characteristics of the head assemblies.

## Description

### FIELD OF THE INVENTION

The present invention relates in general to magnetic head assemblies for rotating disk drives, and particularly, to head assemblies having a staggered leading edge step scheme for tuned air entrainment.

### BACKGROUND OF THE INVENTION

Disk drives of the type that receive data storage media typically have a head assembly for communicating with the storage medium. The data storage cartridge may be of the type that is removable from the disk drive. The storage medium may be disk shaped, and if so, the data storage cartridge may be referred to as a disk cartridge. The head assembly may include a pair of sliders. Each slider is typically mounted on an actuator that is mounted within a disk drive. Additionally, each of the sliders may have a read/write head for interfacing with a storage medium of a disk cartridge. The sliders are also commonly referred to as read/write heads.

Generally, the actuator on which the head assembly is mounted moves between a retracted position and an interfacing position. In the retracted position, the heads are disposed in a position that minimizes the likelihood of damage to the heads from either dynamic or static forces. When a disk cartridge has not been inserted into the disk drive, the actuator holds the heads in this retracted position. When a disk cartridge is inserted into the disk drive, the actuator moves the heads to the interfacing position. In the interfacing position, the actuator is in a position in which the heads can interface with the storage medium that has been inserted into the disk drive.

The storage medium with which the head assembly may interface may have a top surface and a bottom surface. Preferably, in the interacting position the storage medium is disposed between the sliders of the head assembly. One of the sliders may be disposed proximal to the top surface, and one of the sliders may be disposed proximal to the bottom surface. In operation, the storage medium of the disk cartridge is rotated between the sliders and an air bearing is created between the storage medium and the sliders. As the storage medium is rotated, the storage medium "rides" on this air bearing and the heads interface with the storage medium.

The design of head assemblies is significant because it affects the ability of the heads to interface with the storage medium of the disk drive. In particular, the ability of the heads to interface with the storage medium is a function ofthe spacing between the sliders and the storage medium. The spacing between the sliders and the media is important because it affects the ability of the disk drive to communicate with the media. Ordinarily, the sliders fly very low with respect to the media, and in some instances, such as with flexible media, a portion of the sliders may contact the media. As the distance between the media and the sliders increases, the signal degrades. With the development of higher density media, it is desired to develop sliders that have even lower fly heights then those previously developed.

For instance, one of the concerns when designing head assemblies is that the spacing between the read/write heads and the storage medium be relatively constant. If the spacing between the read/write heads and the storage medium is not relatively constant, this can cause a degradation in the ability of the heads to interface with the storage medium. The importance of maintaining the spacing between the storage medium and the heads relatively constant is even more pronounced in disk cartridges that have storage mediums with a relatively high density.

In order to maintain an appropriate spacing between the read/write heads and the storage medium, the air bearing created between the slider and the storage medium should be relatively constant. At high speeds, the flexible storage medium tends to flutter and therefore the importance of maintaining the spacing between the read/write heads and the storage medium is even more pronounced at high speeds. In addition to being dependent on the speed of rotation of the storage medium, the air bearing is a function of the geometry of the head assemblies and the storage medium. Therefore, the geometry of these components is of particular importance.

Slider performance can be measured using several parameters. For example, one important parameter is the "fly height," which is the distance between the magnetic transducer on the read-write head and the magnetic layer on the disk. Another important parameter is "roll," which is the difference between the distance between the inside rail and the disk surface and the distance between the outside rail and the disk surface while the read-write head is flying over the disk. Another important parameter is "pitch," which is the difference between the distance between the leading edge and the disk surface and the distance between the trailing edge and the disk surface while the read-write head is flying over the disk.

A class of conventional sliders are sliders which include a leading edge, a trailing edge, first and second side edges, first and second raised side rails positioned along first and second side edges, respectively, and leading edge tapers for facilitating a flow of air under the side rails during takeoff and for helping to maintain an air bearing under the slider as it flies over the surface of the disk. In this regard, reference is made to U.S. Patents No. 5,831,791 and 5,949,614, both issued to Chhabra (U.S. Patent No. 5,949,614 is a continuation of U.S. Patent No. 5,831,791). These patents show and describe an Adjustable Negative Pressure Air Bearing (NPAB) Slider which provides means for controlling the slider characteristics including roll, pitch, fly height, and skew sensitivity. The NPAB slider controls the flying characteristics of the slider by providing a positive pressure, negative pressure, and transition regions whereby the shape of the regions determines the direction and amount of air flowing into the negative pressure region and thus the magnitude and distribution of negative pressure generated. One embodiment of the slider disclosed has side rails with tapered leading edges, and another embodiment includes side rails with leading edge steps.

For high capacity flexible magnetic recording technology, it is desired that there be contact between the flexible media and the part of the head where the sensor is located. The balance of the head should fly over the flexible media in order to maximize the amount of data that can be stored to and read from the surface of a disk.

In addition to affecting the performance of the head assembly, the spacing between the head assembly and the storage medium also affects the life of both the read/write heads and the storage medium. For instance, if the storage medium fluctuates, the storage medium and the heads may wear unevenly and their respective lives may be reduced. Furthermore, if the contact pressure on the air bearing feature is relatively high, the storage medium and the heads will wear at a faster rate. The amount of fluctuation of the storage medium is a function of the geometry of the head assembly and the storage medium and the speed of rotation. Manufacturing imperfections in head assemblies and variations in head assemblies due to large design tolerances have the potential to cause an imbalance of forces between the head assembly and the storage medium and subsequent fluctuations of the storage medium. Accordingly, it is important to design head assemblies so that the manufacturing tolerances are relatively low and the likelihood of manufacturing imperfections is reduced.

In addition, although it is preferred to have leading edge tapers that are machined, modern manufacturing techniques for higher capacity drives only support heads that are etched, not machined. Therefore, it is necessary to develop improved leading edge steps instead of ramps.

Therefore, a need exists for head assemblies having a leading edge step scheme for tuned air entrainment to improve the performance of the head assemblies for higher speed applications. This invention includes improved head assemblies for disk drives. This invention also includes disk drives and disk drive actuators that employ the improved head assemblies of this invention.

### SUMMARY OF THE INVENTION

According to this invention, an improved head assembly has a first and a second slider for interfacing with a data storage medium of a data storage cartridge. The second slider is preferably disposed below the first slider. The data storage cartridge with which the head assembly of this invention may be employed may be a disk cartridge of the type that can be inserted and ejected from a disk drive. However, the head assembly of this invention may be employed with other types of data storage cartridges. The head assembly may be a magnetic head assembly and be employed with a magnetic data storage media. However, the head assembly of this invention is not so limited and may be employed with other types of data storage media, such as, optical media. Moreover, the head assembly of this invention may be employed with a variety of types of disk drives, such as, a scanner disk drive, a camera disk drive and a computer disk drive. These examples are not intended to be limiting.

The staggered leading edge step scheme of the present invention relates to a pair of opposed sliders having a staggered leading edge step scheme wherein an air bearing generated under each rail of the slider can be adjusted by controlling the air entrainment characteristics of the first and second longitudinal rails to obtain desired slider flying characteristics. The improved head assembly includes a first and a second slider that each have a first and a second longitudinal rail. These rails preferably extend parallel to the longitudinal axis of the respective slider. Both the first and the second sliders have a staggered leading edge step scheme comprising one relatively long leading edge step and one relatively short leading edge step. For explanation purposes, the long leading edge step is formed in the first longitudinal rail and the short leading edge step is formed in the second longitudinal rail, however, the invention is not so limited.

In operation, the short leading edge step is relatively good at entraining air in comparison to the long leading edge step because the flexible storage medium encounters the short leading edge step before the long leading edge step. As the flexible storage medium rotates, the flexible storage medium encounters the short leading edge step and an unopposed air bearing is formed under the second rail. The unopposed air bearing under the second rail forces the flexible storage medium to deflect toward the first rail. The deflection of the flexible storage media creates a ramp like geometry which further facilitates the entrainment of air under the second rail. As the flexible media is deflected, the space available under the second rail for air to be entrained is increased and the space for air to be entrained above the first rail is reduced. In effect, the potential for the long leading edge step to develop a good air bearing is minimized. The reduction in space between the long leading edge step and the flexible storage medium causes the long leading edge step to become relatively poor at entraining air. This staggered leading edge step scheme wherein one rail having a sensor is relatively poor at entraining air and the other rail not having a sensor is relatively good at entraining air, forces the storage medium to comply in an advantageous manner (e.g., conform) to cause intimacy at the sensor.

The sliders may be disposed in the disk drive such that the longitudinal rails of each of the sliders are aligned. Preferably the first longitudinal rail having a long leading edge step of each of the sliders is aligned with the second longitudinal rail having a short leading edge step of the other slider. As described, a storage media may be disposed between the sliders.

Each slider of the head assembly can be formed having one leading edge step constructed differently from the other leading edge step. In addition, the dimensions of the leading edge steps can be varied depending on the particular application to control the flying characteristics of the head assemblies.

Each of the sliders preferably may have a sensor disposed on an end of each of its longitudinal rails. The sensor may be disposed in the first longitudinal rail that has the long leading edge step. Through this sensor the head assembly can communicate with a microprocessor. In a preferred embodiment, the head assembly is a magnetic head assembly that has an electromagnetic sensor for communicating with a magnetic data storage media.

Each of the sliders preferably has a leading edge and a trailing edge. The leading edge is that which leads the sliders into the direction of rotation of the storage medium, and the trailing edges are that which trail the direction of motion. Preferably, the trailing edges of the sliders are beveled. The sensor is preferably disposed proximal to the trailing edge of the sliders.

The head assembly of this invention may be disposed on an actuator within a disk drive. In a preferred embodiment of this invention, the head assembly is disposed on a rotary type of actuator, and in an alternative preferred embodiment the head assembly is disposed on a linear type of actuator. The actuator is preferably moveable between a retracted position and an interfacing position. In the retracted position, the head assembly is retracted relative to the area in which the disk cartridge rests within the disk drive when the disk cartridge is inserted into the disk drive. When a disk cartridge is inserted into the disk drive, the actuator may be moved to the interfacing position. In the interfacing position, the head assembly of the actuator is disposed proximal to the storage medium of the disk drive. More particularly, the storage medium may be disposed between the first and the second slider, so that the first slider is disposed proximal to a first surface of the storage medium and the second slider is disposed proximal to a second surface of the storage medium.

The storage medium is preferably rotated as it rests between the first and the second slider. As the storage medium rotates, pressure is created between the first surface of the storage medium and the first slider and the second surface of the storage medium and the second slider. This pressure creates an air bearing between the first surface of the storage medium and the first slider and the second surface of the storage medium and the second slider.

Because of the staggered leading step scheme in the longitudinal rails of the sliders, the amount of entrained air proximal to the long leading edge steps between the first surface of the storage medium and the first slider and the second surface of the storage medium and the second slider is reduced. By reducing the amount of entrained air in these areas, areas of relatively low pressure are created in the areas that are proximal to the long leading edge steps and the first rails. At the same time, air is being entrained by the short leading edge steps. As a result, the entrained air of the short leading edge steps forms a relatively high pressure in the areas that are proximal to the short leading edge steps and under the second rails. Because of the area of relatively high pressure being opposed by an area of relatively low pressure, the storage medium deflects toward the first rails having the long leading edge steps and the sensors. The staggered leading edge step scheme forces the flexible media to deflect in an advantageous manner to cause intimacy (e.g., contact) at the sensor. That is, the storage medium is deflected upward toward the first longitudinal rail having a sensor of the first slider and downward toward the first longitudinal rail having a sensor of the second slider. Since, as described above, the sensor is disposed proximal to the trailing edge of the first longitudinal rails of the sliders, the storage medium deflects toward the sensor in each slider. The storage medium may even deflect so as to drag or contact the trailing edge of the first longitudinal rail where the sensor is located. By deflecting the storage medium toward the sensors, the performance of the head assembly is enhanced. Other advantages described below may also be achieved by deflecting the storage medium with the staggered leading edge step scheme comprising a relatively long leading edge step and a relatively short leading edge step in each slider.

In a preferred embodiment, the head assembly is a magnetic head assembly that interfaces with a magnetic data storage media. The head assembly may also be used for optical communication with optical data storage media.

### BRIEF DESCRIPTION OF THE DRAWINGS

The foregoing summary, as well as the following detailed description of the preferred embodiments, is better understood when read in conjunction with the appended drawings. For the purpose of illustrating the invention, there is shown in the drawings embodiments that are presently preferred, it being understood, however, that the invention is not limited to the specific methods and instrumentalities disclosed. In the drawings:
Figure 1 is a diagrammatical view of the head assembly according to a preferred embodiment of this invention with a storage medium of a disk cartridge;
Figure 2 is an isometric view of a portion of the head assembly of Figure 1;
Figure 3 is a top view of the portion of the head assembly of Figure 2;
Figure 4 is a diagrammatical view of the operation of the head assembly of Figure 1;
Figure 5 is a top view of the portion of the head assembly of Figure 2;
Figure 6 is a cross section taken along line 6-6 of Figure 4; and
Figure 7 is a diagram illustrating the operation of the head assembly of Figure 1.

### DESCRIPTION OF EXEMPLARY EMBODIMENTS AND BEST MODE

The present invention is directed to a dual rail slider having a staggered leading edge step scheme that forces a storage media rotating between opposed sliders of a head assembly to comply in an advantageous manner (e.g., to conform) to cause intimacy at a sensor on each slider. This can be accomplished by adjusting the length of the leading edge steps relative to one another. The relatively long leading edge step will be relatively poor at entraining air compared to the relatively short leading edge step. For example, the sensor rail can be formed having a long leading edge step that is relatively poor at entraining air and therefore does not build-up a good air bearing under the sensor rail resulting in the sensor rail flying relatively low over the surface of the flexible media and the sensor interfacing (e.g., contacting) with the flexible media. The non-sensor rail can be formed having a short leading edge step that is relatively good at entraining air and therefore builds up a good (e.g., robust) air bearing under the non-sensor rail resulting in the non-sensor rail flying over and not contacting the flexible media. In addition, the present invention provides for forming one leading edge step differently from the other and for varying the dimensions of the staggered leading edge steps to control the flying characteristics of the head assemblies depending on the particular application and desired flying characteristics of the head assembly. Preferably, leading edge steps are used, instead of leading edge tapers, because the head assembly is for higher capacity drives which currently require that the heads be etched, and not machined. The present invention, including a head assembly having a leading edge step scheme for tuned air entrainment, helps to improve the performance of the head assembly for higher capacity disk drives.

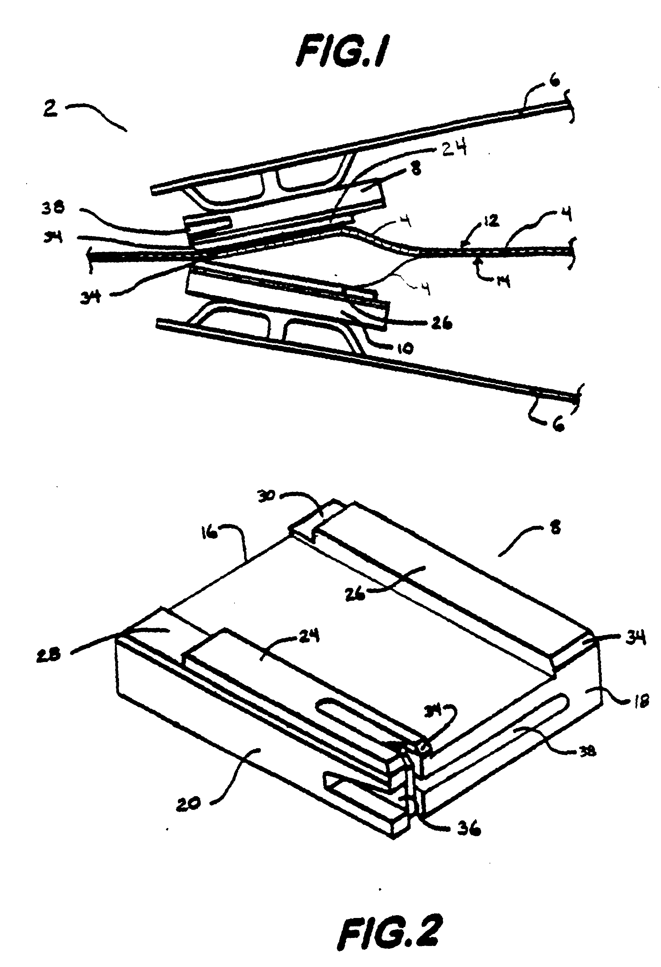

This invention includes an improved head assembly 2, as shown in Figures 1-4, for reading/writing on a data storage medium 4 of a data storage cartridge (not shown). As alluded to above, the improved head assembly 2 of this invention may be used with a variety of types of data storage media, such as magnetic media and optical media. An exemplary data storage cartridge that has a data storage medium 4 is shown in commonly assigned U.S. Patent No. 5,650,891 entitled "Apparatus For Performing Multiple Functions In A Data Storage Device Using A Single Electro-Mechanical Device," which is hereby incorporated by reference. Even more specifically, the head assembly of this invention may be employed with a magnetic media, such as the Zip® disk cartridge, the Clik® disk cartridge, and the like.

This invention is directed toward providing enhanced electrical communication with relatively high density media, such as the Zip® disk cartridge or storage media that rotate at higher speeds relative to that of the Iomega Zip® 100 disk cartridge. With the development of media having a density greater than that of the Zip® 100 disk cartridge, improved read/writing devices are needed. The head assembly of this invention also provides improved electrical communication with media having a density that is higher than that of the Zip® 100 disk cartridge. In the embodiments described below, the head assembly is described as a magnetic head assembly that is employed with flexible magnetic storage media. However, it should be understood that the head assembly of this invention can be employed with other types of media, such as optical media.

In a preferred embodiment, the disk drive (not shown) with which the head assembly 2 of this invention may be employed may be of one of a variety of types, including but not limited to a stand alone disk drive, a personal computer disk drive, a portable personal computer disk drive, such as in a laptop computer disk drive or a notebook type of computer disk drive, a scanner disk drive, a camera disk drive, a hand-held type of computer disk drive, and the like. For example, the magnetic head assembly of this invention may be employed with the disk drive described in U.S. Patent No. 5,650,891.

By way of background, the disk drive with which the head assembly 2 of this invention may be employed may have a disk drive motor for operating the disk cartridge, such as, but not limited to, the one shown in U.S. Patent No. 5,650,891. In this type of disk drive, the disk drive motor is a spindle motor that is disposed in the chassis of the disk drive. When the disk cartridge is inserted into the disk drive, the disk drive motor engages the hub of the disk cartridge. When engaged with the hub of the disk cartridge, the disk drive motor is operated by a microprocessor to rotate the hub and the attached storage medium 4.

Neither the disk drive nor the disk cartridge described above are part of this invention. However, they may be used in combination with the magnetic head assembly 2 of this invention, which is described in detail below.

The head assembly 2 of this invention may be disposed on an actuator 6 within the disk drive. The actuator 6 depicted in part in Figure 1 may be a linear type of actuator as disclosed in U.S. Patent No. 5,650,891. Alternatively, the actuator 6 may be a rotary type of actuator as shown in commonly assigned United States Patent No. 5,636,085, entitled "Magnetic Read/Write Head Assembly Configuration With Bleed Slots Passing Through Rails to Stabilize Flexible Medium While Attaining Low Fly Heights With Respect Thereto," which is hereby incorporated by reference.

The head assembly 2 of this invention may include a first slider 8 and a second slider 10. When the actuator is in the interfacing position, described more fully below, the data storage medium 4 may be disposed between the first 8 and the second slider 10, as shown in Figure 1. In this position, the first slider 8 may be disposed proximal to a first surface 12 of the storage medium 4, and the second slider 10 may be disposed proximal to a second surface 14 of the storage medium 4. As shown, the first slider 8 is disposed above the storage media and the second slider 10 is disposed beneath the storage media. However, the invention is not so limited. The first slider 8 and the second slider 10 are disposed on opposing sides of the media and they may not be disposed above and below each other depending upon the orientation of the media.

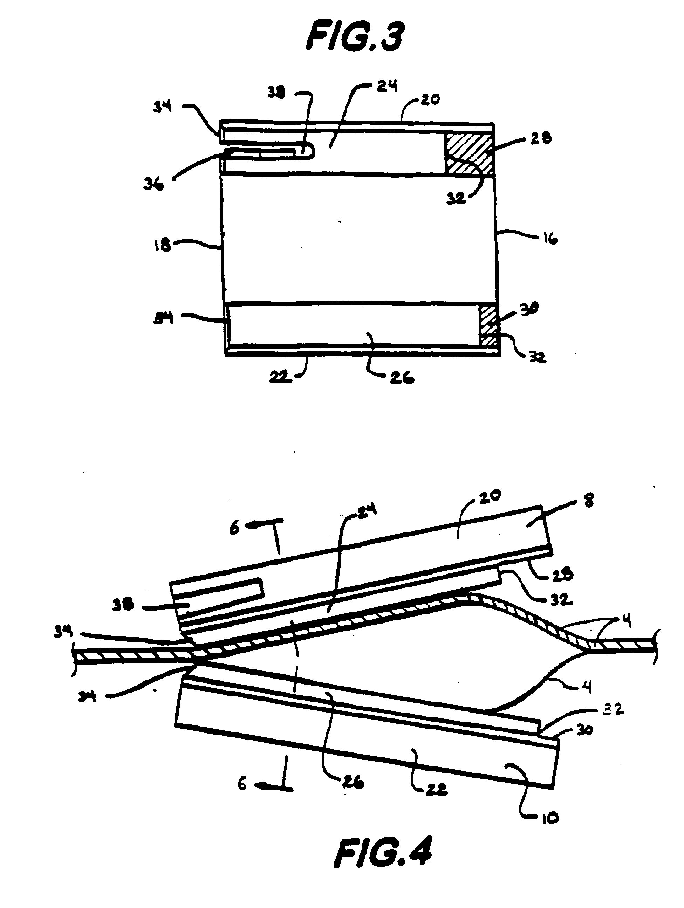

Figures 2 and 3 show an exemplary slider having a staggered leading edge step scheme for controlling air entrainment and formation of an air bearing under the dual rail slider design. Although only the first slider 8 is shown in Figures 2 and 3, it will be appreciated that the second slider 10 is the same as the first slider 8. Accordingly, the following discussion of the first slider 8 applies to the second slider 10. The slider 8 includes a leading edge 16, a trailing edge 18, first and second side edges 20, 22, first and second raised side rails 24, 26 positioned longitudinally along first and second side edges 20, 22, respectively, and staggered leading edge steps 28, 30 for controlling air entrainment and for facilitating a flow of air (e.g., an air bearing) under the side rails 24, 26 during takeoff and for helping to maintain an air bearing under the slider 8 as it flies over a surface 12 of the disk 4. The dual rail sliders have a staggered leading edge step scheme which forms an air bearing under each of the rails acts to force (e.g., deflect) the flexible media to comply in an advantageous way (e.g., conform) to cause intimacy at the sensor.

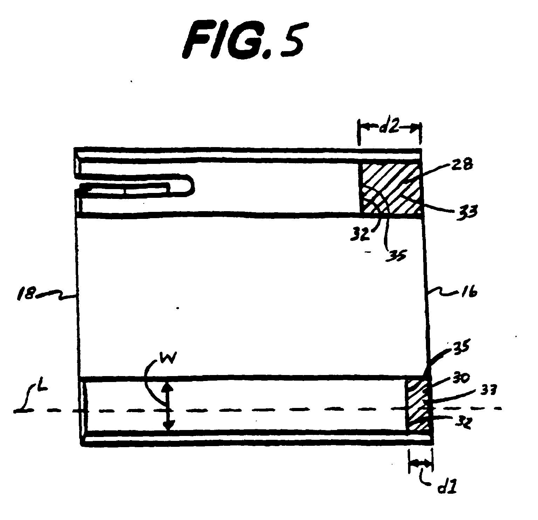

Both the first slider 8 and the second slider 10 have a pair of longitudinal rails 24, 26, as best shown in Figures 2 and 3. The longitudinal rails 24, 26 of each of the sliders 8, 10 may extend the length of each of the respective sliders. Each of the rails 24, 26 has a first longitudinal end 32 and a second longitudinal end 34. Preferably, the second longitudinal end 34 of the rails 24, 26 is beveled, however, it need not be beveled. The first longitudinal end 32 of each of the rails 24, 26 may be the substantially vertical surface where the raised portion of rails 24, 26 step down to the substantially horizontal surface of each of the steps 28, 30. The second longitudinal end 34 of each of the rails 24, 26 may be the trailing edge 18 of each of the rails 24, 26. The leading edge 16 is that end which leads the direction of motion of the slider relative to the storage medium 4, and the trailing edge 18 is that which trails the direction of motion of the slider relative to the storage medium 4. Each rail 24, 26 of the first slider 8 and the second slider 10 has a width W that extends transverse to the longitudinal L axis of each of the rails, as shown in Figure 5.

Both the first and the second slider 8, 10 of the head assembly 2 have staggered leading edge steps 28, 30 formed in their longitudinal rails 24, 26, respectively. The improved head assembly 2 has a staggered leading edge step scheme that allows the flying characteristics of the head to be controlled by providing a first rail 24 having a long leading edge step 28 that does not entrain air well and therefore forms a relatively poor air bearing under the first rail 24 and a second rail 26 having a short leading edge step 30 that entrains air better than the long leading edge step 28 of the first rail 24 thereby forming a more robust air bearing under the second rail 26. The first rail 24 includes a sensor 36 for interfacing with the disk media 4 and the second rail 26 does not have a sensor. The staggered leading edge step scheme of forming the steps such that one entrains air better than the other acts to move (e.g., deflect) the storage media 4, allowing one rail 24 having a sensor to fly relatively low and interface with the disk media while the other rail 26 and the balance of the slider is able to fly relatively high over the disk media. The staggered leading edge step scheme thereby improves the performance of the head assembly 2 by providing intimacy at the sensor.

As shown in Figures 1, 2, 3, 4, 5, and 7, the first longitudinal ends 32 of the raised side rails 26, 28 vary in distance from the leading edge 16 of the first and second slider 8,10. The first longitudinal end 32 of the short leading edge step 30 is a distance d1 from the leading edge 16. The first longitudinal end 32 of the long leading edge step 28 is a distance d2 from the leading edge 16. Accordingly, the long leading edge step 28 has a length equal to d2 and the short leading edge step 30 has a length equal to d1. As shown in Figure 5, the distance d2 represents the long leading edge step and is greater than the distance d1 which represents the short leading edge step. Preferably, the distance d2 is about two to about three times greater than the distance d1. However, the present invention provides for varying the dimensions d1, d2 and their respective ratio with respect to one another in order to control the flying characteristics of the head assemblies depending on the particular application and desired flying characteristics of the head assembly.

When assembled to the actuator 6 as shown in Figure 1, the first slider 8 is disposed above the second slider 10. Preferably, the sliders are gram-loaded toward each other when assembled to the actuator. The sliders 8, 10 may be assembled to the actuator 6 with any of a variety of fastening techniques and may be mounted to a flexibly mounted suspension arm of the actuator 6. When mounted to the actuator 6 the first rail 24 having a long leading edge step 28 of the first slider 8 is disposed above the second longitudinal rail 26 having a short leading edge step 30 of the second slider 10, as shown in Figures 1 and 4. Similarly, the first longitudinal rail 24 having a long leading edge step 28 of the second slider 10 is disposed beneath the second longitudinal rail 26 having a short leading edge step 30 of the first slider 8. This is also understood with reference to Figure 2, where it can be imagined that the slider of Figure 2 is mounted as shown in Figure 1 as both the first slider 8 and the second slider 10.

In operation, the short leading edge step 28 is relatively good at entraining air in comparison to the long leading edge step 30 because the flexible storage medium encounters the short leading edge step 28 before the long leading edge step 30. As the flexible storage medium 4 rotates, the flexible storage medium 4 encounters the short leading edge step 28 and an unopposed air bearing is formed under the second rail 26. The unopposed air bearing under the second rail 26 forces the flexible storage medium 4 to deflect toward the first rail 24. The deflection of the flexible storage media 4 creates a ramp like geometry which further facilitates the entrainment of air under the second rail 26. As the flexible media 4 is deflected and the space available under the second rail 26 for air to be entrained is increased, the space for air to be entrained above the first rail 24 is reduced. In effect, the potential for the long leading edge step 28 to develop a good air bearing is minimized. The reduction in space between the long leading edge step 28 and the flexible storage medium 4 causes the long leading edge step 28 to become relatively poor at entraining air. This staggered leading edge step scheme wherein the first rail 24 having a sensor 36 is relatively poor at entraining air and the second rail 26 not having a sensor is relatively good at entraining air, forces the storage medium 4 to comply in an advantageous manner (e.g., conform) to cause intimacy at the sensor.

As shown in the Figures, the leading edge steps 28, 30 of the side rails 24, 26 can be formed as plain leading edge steps using conventional techniques. As shown, the leading edge steps 28, 30 are formed having two or more surfaces. For example, as shown in Figure 5, the leading edge step 28, 30 includes a first surface 33 being disposed in a substantially horizontal plane and being defined by the leading edge 16, the two sides 20, 22 of the slider, and a bottom edge 47 of the first longitudinal end 32 of the rail, and a second surface 35 being disposed in a substantially vertical plane and being defined by the bottom edge 47 of the first longitudinal end 32, the two sides 20, 22, and the top edge 48 of the first longitudinal end 32.

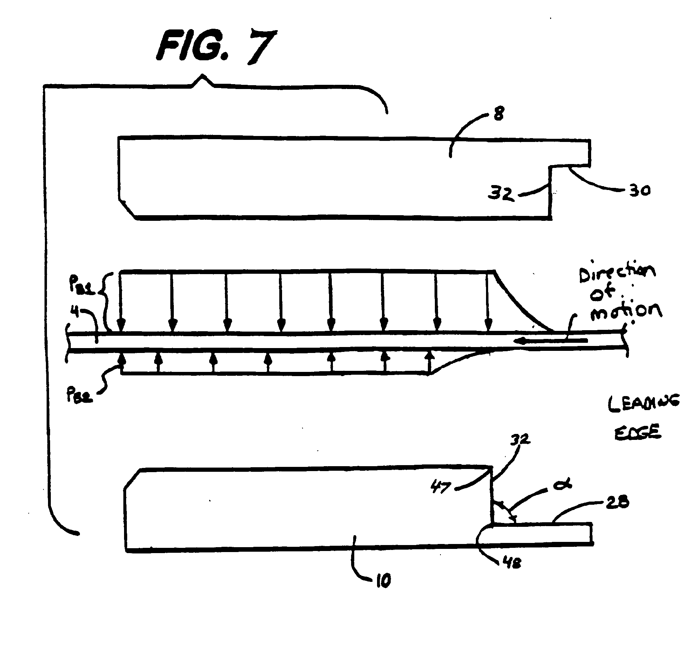

As shown in Figure 7, each leading edge step 28, 30 has a step angle α which is formed between the first surface 33 and the second surface 35 of each leading edge step 28, 30. For example, the first surface 33 of each leading edge step may have a slight taper, or incline, from the leading edge 16 to the bottom edge of the first longitudinal end 32 and/or the second surface 35 of the leading edge step may have a slight taper toward the trailing edge from the bottom edge 47 to the top edge 48. The slight taper if any of the first surface 33 and/or second surface 35 is generally in the order of about 1-5 degrees. The step angle α may be formed as a right angle, or preferably, the step angle α is formed having an angle slightly greater than 90 degrees. For example, in one preferred embodiment, the step angle α is an angle of about 90 degrees to about 95 degrees.

Preferably, the long leading edge step 28 and the short leading edge step 30 are formed on each rail 24, 26 proximate the leading edge 16 of each slider 8, 10. Even more preferably the long leading edge step 28 is formed on the first rail 24 having a sensor 36 disposed therein and the short leading edge step 30 is formed on the second rail 26 which does not have a sensor. The long leading edge step 28 and the short leading edge step 30 of the first slider 8 are preferably similar to, or the same as, the long leading edge step 28 and the short leading edge step 30 of the second slider 10. The long leading edge step 28 and the short leading edge step 30 may have a variety of dimensions d1, d2 to control the flying characteristics of the head assemblies depending on the particular application and desired flying characteristics of the head assembly.

Preferably, the first rail 24 of each of the sliders 8, 10 has a sensor 36 for electrically communicating with the storage medium 4. The sensor 36 may be in electrical communication with a microprocessor (not shown), so that the storage medium 4 can electrically communicate through the sliders 8, 10 with the microprocessor. Through the sensor, the respective slider couples the storage media to the microprocessor. In a preferred embodiment of this invention, the sensor 36 is in the first longitudinal rail 24 of each slider 8, 10 that has the long leading edge step 28. In an alternative embodiment, the first slider 8 may have a sensor 36 in both ends of the first longitudinal rail 24 that has the long leading edge step 28. In this alternative embodiment, one of the sensors may provide a high density core and the other may provide a low density core. Preferably, the low density core leads the direction of motion and the high density core trails the direction of motion of the media.

In each of these embodiments, the long leading edge step 28 and the short leading edge step 30 of the second slider 10 would match the long leading edge step 28 and the short leading edge step 30 of the first slider 8, and the short leading edge step 30 is always aligned with a longitudinal rail of the other slider that has a long leading edge step 28 and the long leading edge step 28 is always aligned with a longitudinal rail of the other slider that has a short leading edge step 30. As described in further detail below, one of the functions of the staggered leading edge step scheme is to facilitate the deflection of the storage medium 4 of the disk cartridge.

Figures 1,4 and 6 depict the operation of the head assembly 2 of this invention. As shown, in the interfacing position the storage medium 4 of the disk drive is disposed between the first and the second slider 8, 10. The first slider 8 is disposed proximal to the first or top surface 12 of the storage medium, and the second slider 10 is disposed proximal to the second or bottom surface 14 of the storage medium 4. In operation, the storage medium 4 is rotated by a disk drive spindle motor (not shown), or the like. The direction of rotation of the storage medium 4 is into the leading edges 16 of the sliders 8, 10. While rotating, an air bearing is created in between each of the sliders 8, 10 and the storage medium 4. As the flexible storage medium 4 rotates, the flexible storage medium 4 encounters the short leading edge step 30 and an unopposed air bearing is formed under the second rail 26. The unopposed air bearing under the second rail 26 forces the flexible storage medium 4 to deflect toward the first rail 24. The deflection of the flexible storage media 4 creates a ramp like geometry which further facilitates the entrainment of air under the second rail 26. This creates an air bearing P_{B1} having a relatively high pressure, in the region between the second rail 26 of the second slider 10 and the disk medium 4, as shown in Figure 7. The staggered leading edge step scheme of the present invention results in a longer and gentler deformation because it maximizes the length over which the deformation occurs (e.g., from the leading edge step to the trailing edge of the slider.

As the flexible media 4 is deflected and the space available under the second rail 26 for air to be entrained is increased, the space for air to be entrained above the first rail 24 is reduced. In effect, the potential for the long leading edge step 28 to develop a good air bearing is minimized. The reduction in space between the long leading edge step 28 and the flexible storage medium 4 causes the long leading edge step 28 to become relatively poor at entraining air. Only a portion of the air entering the long leading edge step 28 actually flows under the first rail 24. This results in a less robust air bearing under the first rail 24 having sensor 36 than might otherwise form. This creates an air bearing P_{B2} having a relatively low pressure in the region between the first rail 24 of the first slider 8 and the disk medium 4, as shown in Figure 7.

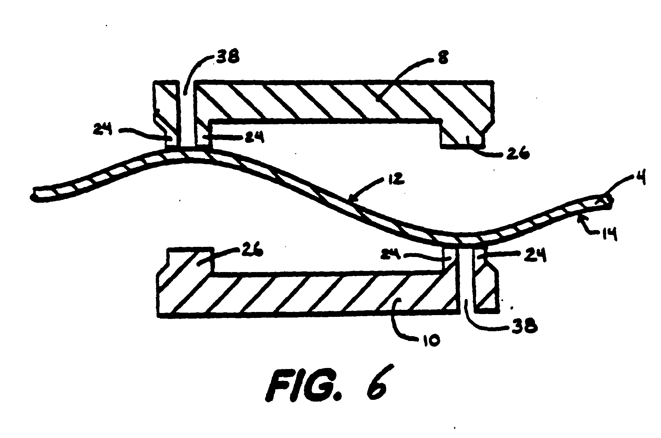

Because of these areas of relatively low pressure P_{B2} and relatively high pressure P_{B1}, the storage medium 4 deflects substantially as shown in Figures 1, 4 and 6 toward the trailing edges 34 of the first rail 24 having the sensor 36 of each of sliders 8, 10. It will be appreciated that the storage medium 4 deflects upward toward the sensor rail 24 in the first or upper slider 8 and downward toward the sensor rail 24 in the second or bottom slider 10, as best shown in Figure 6. This deflection occurs from the relatively high pressure P_{B1} resulting from the short leading edge step 30 opposed by the relatively low pressure resulting from the long leading edge step 28 in the respective slider to the trailing edge of the respective slider. As shown in Figures 1, 4, and 6, the storage medium 4 deflects in a ripple or wave shape since it is deflecting both upward and downward.

By deflecting the storage medium 4 toward the sensor 36 proximal the trailing edges 18 of the first and the second slider 8, 10, the performance of the head assembly 2 is improved. In particular, since the storage medium 4 deflects toward the sensors 36 in the first rails 24, the performance of the head assembly 2 will be improved. Also, the performance of the head assembly is improved because the staggered leading edge step scheme maximizes the length of the rail over which the deformation of the media occur resulting in a longer and more gentle deformation. This is an improvement over conventional sliders having three rails and also sliders having a single cross-slot form in the center of the rails because these conventional sliders have only use the back end of the rail (e.g., a shorter length) resulting in a shorter and more severe deformation over the back end of the rail.

In a preferred embodiment of this invention, the first and the second slider 8, 10 have standard sizes having dimensions that are well known in the art. However, the standard sizes are provided by way of example and not by way of limitation. The invention may be employed with sliders of a variety of sizes, including but not limited to, standard, micro, pico, and femto sliders.

With the head assembly of this invention, the media preferably deflects so that the trailing edge of the first longitudinal rail having a sensor of each slider actually touches the media. Since the media is flexible and relatively wear resistant, such as that used in the ZIP® disk cartridge, the media can withstand the contact between the sliders and the media. This contact or closeness between the media and the sensors enhances the electrical communication between the media and the slider. As is generally understood, the voltage or strength of the electrical signal between the slider and the media is dependent upon the spacing between the media and the sensor. The strength of the signal decreases in an exponential relationship with the spacing between the media and the sensor. (This is generally known as the Wallace equation: voltage is proportional to e^{-2π(spacing)/wave length}). Thus, with the media dragging on the rails that have the sensors, the electrical signal is enhanced between the media and the sensor. This is particularly important for magnetic heads that must interface with improved magnetic media that have a relative high density and more storage capacity, for example magnetic media that have more storage capacity that the ZIP® 100 disk cartridge. As described in further detail below, the head assembly of this invention enhances communication with data storage media such as, for example, the ZIP® disk cartridge.

This invention is also significant in enhancing communication with media that are rotated at higher velocities. An increase in velocity has three main effects of interest to this discussion. First, the slider typically flies higher than it does at lower velocities. Second, there is an increase in energy associated with disk vibrations as the disk rotation speeds are increased. The third effect requires some introduction. Flexible media disk drives typically have a "compliance zone" which defines the range of geometric tolerances for the parts involved in the positioning of the heads relative to the media over which communication of sufficient quality is maintained between the heads and the media. These tolerances add up to variations in penetration, pitch and roll. The sensitivity of the Zip® 100 drive to these variations is known to increase (signal losses increase) with increasing disk rotation speed. Thus, the third effect is that the disk becomes less compliant with increasing rotation speed. It is desired to increase the speed of rotation of the media to increase the data transmission rate between the media and the sensor. This invention permits increased speeds of rotation of the media by providing contact between the media and the head where the sensor is disposed. This contact ensures that the sensor will remain in communication with the media at higher speeds and thereby permit higher data transmission rates, than, for example, the Zip 100® disk drive.

Magnetic head assemblies, such as that shown in the Chhabra patents, have leading edge tapers or plain leading edge steps formed on the longitudinal rails in each slider that are aligned with leading edge tapers or plain steps formed on the longitudinal rails in the other slider. Because of this, when the storage media is employed with the head assembly taught by Chhabra, the media will not preferentially deflect toward the sensor in each slider. Rather, because the leading edge tapers or plain steps are aligned in Chhabra, an imbalance of forces is not created and the media is not deflected as taught by the head assembly of this invention. As discussed in the Chhabra patents, the magnetic head assembly taught by Chhabra provides relatively low fly heights. In addition, with the development of higher capacity storage media, lower fly heights are necessary to create the required electrical connection between the media and the sliders. Higher density media require fly heights that are in the range of about 0 to about 3 micro inches. The magnetic head assembly of this invention addresses this need and results in even lower fly heights than that taught by Chhabra and may even cause the sliders to drag (e.g., contact) on the media. This dragging or contact between the media and the slider causes the enhanced communication between the sensor and the media.

In order to further understand the operation of this invention, a schematic force diagram is provided in Figure 7. Figure 7 illustrates the operation of the media with the short leading edge step 30 in the first slider 8 and the long leading edge step 28 in the second slider 10. Although the media 4 is shown non-deflected in Figure 7 for purposes of explaining the invention, it should be understood that the media deflects as shown in Figures 1, 4, and 6 in operation. It should be understood that the media will react similarly to the long leading edge step 28 in the first slider 8 and the short leading edge step 30 in the second slider 10, except that the pressures will be reversed in direction, so as to correspond to the surfaces of the rails. As is generally understood, the sliders are preloaded or gram-loaded toward the magnetic media. This gram loading causes a biasing toward the media. The rotation of the storage media combined with this gram loading creates an air bearing between the storage media and the sliders. A contact pressure may also be created as the media rotates and contacts the slider.

As shown in Figure 7, a first more robust air bearing pressure P_{B1} formed on each side of the media sharply increases as the media rotates between the short leading edge steps 30 of the sliders 8, 10. The short leading edge steps 30 create this first increase. A second less robust air bearing pressure P_{B2} formed on each side of the media 4 gradually increases as the media rotates under the long leading edge steps 28. The long leading edge steps 28 create this gradual increase. The more robust air bearing pressure P_{B1} imposes an air bearing pressure downward onto the media 4 which is of a greater magnitude than the less robust air bearing pressure P_{B2}. As a result, this greater downward pressure P_{B1} accelerates the media downward toward the sensor rail 24. Because the media contacts, the second or bottom slider a contact pressure (not shown) is exerted upward on the media. This contact pressure combines with the air pressure P_{B2} exerted by the lower slider to oppose the air pressure P_{B1} exerted by the top slider and cause the media to deflect back upward toward its level plane. As the media exits the slider, the media again is level because the pressures are removed.

In summary, since the short leading edge step 30 in each rail is aligned with a long leading edge step 28 in the opposed rail, the air bearing on the surface of the media near the short leading edge step 30 is a greater magnitude than the air bearing on the surface of the media near the long leading edge step 28 because the short leading edge step 30 is encountered first and is unopposed by the long leading edge step 28. This imparts momentum to the media 4 to deflect toward the rail 24 with the long leading edge step 28 and closer to the sensor 36. This also causes lower flying heights and contact between the media and the slider where it is desired, at the location of the sensor. This enhances the electrical signal between the media and the slider and enables higher density media to be used.

When the media is spun, the media wrinkles and vibrates. The surface of the media does not remain flat because it is a flexible media. By deflecting the media toward the sensor and creating a contact pressure between the media and the sensor, the media is flattened proximal to the sensor. This enhances the communication between the media and the sensor. This should be compared to the heads taught by Chhabra which provides no preference for deflecting the media toward the sensor.

The head assembly of this invention can also be employed with optical media and optical sensors such as near field optical sensors and far-field optical sensors.

Another advantage of the staggered leading edge step scheme of the present invention is that the features of the staggered leading edge step scheme can be easily incorporated into existing, modern manufacturing techniques for the manufacturing of head sliders. For example, the sliders 8, 10 can be fabricated from a ceramic wafer using any suitable conventional technique, including the following exemplary process. First, one or more magnetic transducers are formed on the wafer surface, e.g., by vacuum-depositing the various layers used to form the transducers, and photolithographically patterning those layers. Vacuum-deposition can be accomplished by sputtering or evaporation.

The wafer can then be cut into bars by methods well known in the art. The bars are cut such that a row of transducers are contained on a surface of each bar. Thereafter, a mask is applied to the bar to define the recessed surface areas, e.g., the area between the longitudinal rails 24, 26, and the staggered leading edge steps 28, 30. In one embodiment, the masking is accomplished photolithographically, using positive or negative photoresist. In other words, photoresist is deposited on the bar, selectively exposed to light, and developed, thereby removing the portion of the resist over the areas that the recessed surfaces are to be formed. The resist used to define the recessed region between the rails, as well as the resist used to define the leading edge steps, can also be patterned using other suitable means, such as an e-beam.

The exposed areas of the bar (e.g., where the recessed regions are to be formed) can then be etched by, for example, ion milling, reactive ion etching, laser etching or other suitable processes. By appropriately masking and etching, several sliders can be formed simultaneously on a single bar.

The sliders can then be cut from the bar. As illustrated in the Figures, there is typically some distance (e.g., between 10 µm and 50 µm) between outer edges of the longitudinal rails 24, 26 and first and second side edges 20, 22 of the sliders 8, 10, respectively. This provides a measure of tolerance to prevent damage to first and second raised side rails 24, 26 when the bar is cut into individual sliders during manufacturing.

Although illustrated and described herein with reference to certain specific embodiments, the present invention is nevertheless not intended to be limited to the details shown. Rather, various modifications may be made in the details within the scope and range of equivalents of the claims and without departing from the invention.

## Claims

1. A head assembly for interfacing with a storage medium of a disk cartridge, comprising:
a first slider having a leading edge, a trailing edge, a first side, and a second side, said first slider comprising:
(i) a first rail, extending longitudinally along said first side of said first slider, and having a long leading edge step formed proximate said leading edge of said first rail for reducing an air bearing under said first rail;
(ii) a second rail, extending longitudinally along said second side of said first slider, and having a short leading edge step formed proximate said leading edge of said second rail for improving an air bearing under said second rail;
(iii) a sensor disposed in a trailing edge of said first rail of said first slider for communicating with said storage medium; and
a second slider aligned with said first slider and having a leading edge, a trailing edge, a first side, and a second side, said second slider comprising:
(i) a first rail, extending longitudinally along said first side of said second slider and having a long leading edge step formed proximate said leading edge of said first rail for reducing an air bearing under said first rail, said first rail of said second slider being aligned with said second rail of said first slider;
(ii) a second rail, extending longitudinally along said second side of said second slider, said second rail of said second slider being aligned with said first rail of said first slider, and having a short leading edge step formed proximate said leading edge of said second rail for improving an air bearing under said second rail;
(iii) a sensor disposed in a trailing edge of said first rail of said second slider for communicating with said storage medium; and
wherein said long leading edge step and said short leading edge step of said first and said second sliders provide a staggered leading edge step scheme for an improved head performance by forcing said storage medium to comply in an advantageous way to cause intimacy at said sensor.

2. The head assembly of claim 1, wherein said staggered leading edge step scheme moves said storage medium such that said first rail having said sensor of each slider contacts said storage medium while allowing said second rail not having a sensor of each slider and a balance of each slider to fly over said storage medium.

3. The head assembly of claim 1, wherein each of said long leading edge steps extends from said leading edge of said slider a distance d2 along said longitudinal length of each of said first rails and each of said short leading edge steps extends from said leading edge of said slider a distance d1 along said longitudinal length of each of said rails.

4. The head assembly of claim 3, wherein said length d2 of said long leading edge steps is greater than said length d1 of said short leading edge steps.

5. The head assembly of claim 3, wherein said length d2 is about two times as long as said length d1.

6. The head assembly of claim 3, wherein said length d2 is about three times as long as said length d1.

7. The head assembly of claim 1, wherein each of said long leading edge steps and each of said short leading edge steps comprises a plain leading edge step.

8. The head assembly of claim 7, wherein said plain leading edge steps comprise two surfaces, a first surface being disposed in a substantially horizontal plane and being defined by said leading edge, said first and second sides, and a bottom edge of said first longitudinal end of said second rail, a second surface being disposed in a substantially vertical plane and being defined by said bottom edge of said first longitudinal end, said first and second sides, and a top edge of said first longitudinal end of said first rail.

9. The head assembly of claim 1, further comprising forming said staggered leading edge step of one slider differently from the other of said sliders.

10. The head assembly of claim 1, further comprising varying the dimensions of said long leading edge steps in comparison to said short leading edge steps to control the flying characteristics of said head assemblies and to cause intimacy at said sensor.

11. The head assembly of claim 1, wherein said head assembly comprises a magnetic head assembly and said sensors comprise electromagnetic sensors for communication with a magnetic storage medium.

12. The head assembly of claim 1, wherein said head assembly comprises an optical head assembly and said sensors comprise optical sensors for communication with an optical data storage media.

13. The head assembly of claim 1, further comprising an area of relatively low pressure and an area of relatively high pressure, said area of relatively low pressure being created in an area proximal to each of said long leading edge steps between said first rails and said storage medium and said area of relatively high pressure being created in an area proximal to each of said short leading edge steps between said second rails and said storage medium, wherein said area of relatively high pressure is opposed by said area of relatively low pressure thus causing said storage medium to deflect toward said sensors on said first rails.

14. A disk drive for receiving a disk cartridge that has a storage medium that has a first surface and a second surface, comprising:
an actuator for communicating with said cartridge and said storage medium;
a head assembly mounted on said actuator, comprising:
a first slider having a leading edge, a trailing edge, a first side and a second side, said first slider having staggered leading edge steps comprising:
(i) a first rail, extending longitudinally along said first side of said first slider, and having a long leading edge step formed proximate said leading edge of said first rail for reducing an air bearing under said first rail;
(ii) a second rail, extending longitudinally along said second side of said first slider, and having a short leading edge step formed proximate said leading edge of said second rail for improving an air bearing under said second rail;
(iii) a sensor disposed in a trailing edge of said first rail of said first slider for communicating with said storage medium; and
a second slider aligned with said first slider and having a leading edge, a trailing edge, a first side, and a second side, said second slider having staggered leading edge steps comprising:
(i) a first rail, extending longitudinally along said first side of said second slider and having a long leading edge step formed proximate said leading edge of said first rail for reducing an air bearing under said first rail, said first rail of said second slider being aligned with said second rail of said first slider;
(ii) a second rail, extending longitudinally along said second side of said second slider, and having a short leading edge step formed proximate said leading edge of said second rail for improving an air bearing under said second rail, said second rail of said second slider being aligned with said first rail of said first slider;
(iii) a sensor disposed in a trailing edge of said first rail of said second slider for communicating with said storage medium;
wherein said disk cartridge is inserted so that said first surface of said storage medium is proximal to said first slider and said second surface of said storage medium is proximal to said second slider, said staggered leading edge steps functioning to deflect said storage medium toward said sensor thereby improving communications between said actuator and said storage medium when said storage medium is rotated between said first and said second slider.

15. A disk drive that has an improved magnetic head assembly for interfacing with a removable magnetic disk cartridge that has a magnetic media and a spindle motor for rotating said magnetic media when said disk cartridge is inserted into said disk drive, comprising:
a first slider that has a staggered leading edge step scheme including a long leading edge step formed in a first longitudinal rail, a short leading edge step formed in a second longitudinal rail, and a sensor disposed in a trailing edge of said first longitudinal rail for interfacing with said magnetic media;
a second slider that has a staggered leading edge step scheme including a long leading edge step formed in a first longitudinal rail, a short leading edge step formed in a second longitudinal rail, and a sensor disposed in a trailing edge of said first longitudinal rail for interfacing with said magnetic media; and
an actuator on which said first slider and said second slider are mounted, said first slider being disposed above said second slider, said sliders being aligned so that said first longitudinal rail of each slider is aligned with said second rail of said other slider;
said magnetic media being disposed between said sliders when inserted into said disk drive and when rotated by said spindle motor said long leading edge steps and said short leading edge steps of said staggered leading edge step scheme of each slider act to deflect said storage medium toward said sensor of said first rail to improve communications between said sliders and said magnetic media thereby improving the performance of said head assembly.
